# FASCICULE DE BREVET EUROPEEN

(11) **EP 3 802 287 B1**
(45) Date de publication et mention de la délivrance du brevet: **07.08.2024**
(21) Numéro de dépôt: 19790578.9
(22) Date de dépôt: 17.04.2019
(51) Int. Cl.: B62D 21/11, B60G 7/02, B62D 21/15

(54) **STRUCTURE AVANT DE VEHICULE FAVORISANT L'EVITEMENT DU VEHICULE PAR RAPPORT A L'OBSTACLE EN CAS DE CHOC A FAIBLE RECOUVREMENT**
VORDERWAGENSTRUKTUR ZUR FÖRDERUNG DER HINDERNISVERMEIDUNG FÜR EIN FAHRZEUG BEI EINEM AUFPRALL MIT GERINGFÜGIGER ÜBERSCHNEIDUNG
FRONT VEHICLE STRUCTURE PROMOTING OBSTACLE AVOIDANCE FOR A VEHICLE IN THE EVENT OF A SMALL-OVERLAP IMPACT

(30) Priorité: 24.05.2018 FR 1854416
(43) Date de publication de la demande: 14.04.2021
(73) Titulaire: Stellantis Auto SAS, 78300 Poissy (FR)
(72) Inventeur: PERU, Marc, 92290 CHATENAY MALABRY (FR); COIFFIER, Frederic, 91310 Montlhery (FR)
(86) Numéro de dépôt international: PCT/FR2019/050907
(87) Numéro de publication internationale: WO 2019/224441

(56) Documents cités:
- EP-A2- 1 312 535
- DE-A1- 102012 204 032
- DE-A1- 4 426 880
- JP-A- 2009 208 556

## Description

L'invention a trait au domaine des véhicules automobiles, plus particulièrement au comportement en déformation des véhicules en cas d'impact frontal à faible recouvrement.

Généralement, la structure avant d'un véhicule automobile comprend un berceau avec deux poutres longitudinales, couramment appelées prolonges de berceau, qui s'étendent depuis des extrémités latérales dudit berceau. Deux triangles de suspension sont fixés latéralement au berceau, et servent à soutenir des roues.

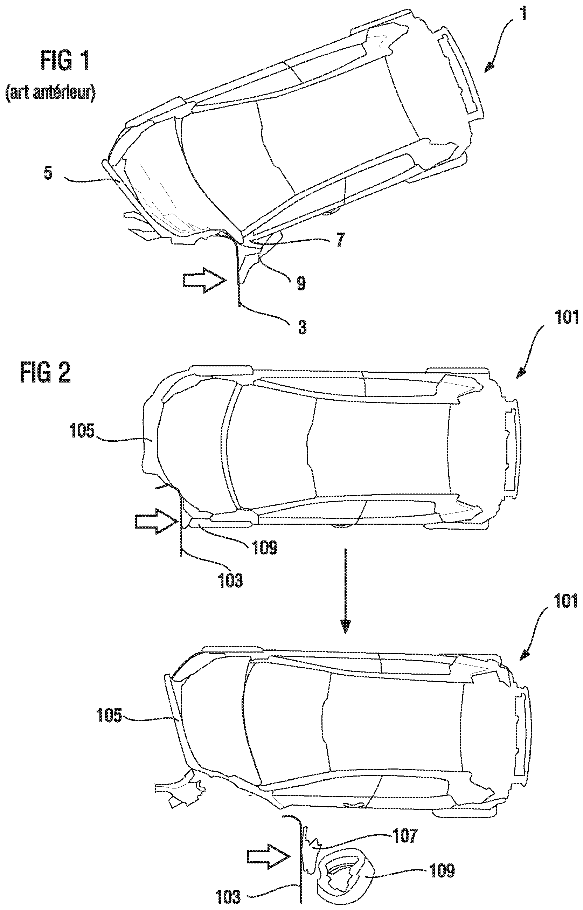

Aux États-Unis, un nouveau protocole de choc frontal à faible recouvrement a été mis en place ; il sera par ailleurs bientôt appliqué en Chine. Il consiste à produire un impact à 64km/h, avec un butoir rigide, sur 25% de l'avant d'un véhicule automobile. Ce type de protocole permet d'imiter des chocs avec un mur ou un poteau s'exerçant sur les extrémités latérales et avant du véhicule. Les effets d'un tel choc, sur un véhicule tel que selon l'art antérieur, sont décrits à la figure 1. Ainsi, lors d'un choc à faible recouvrement induit par un butoir 3, une poutre de pare-chocs 5, positionnée à l'avant du véhicule 1, s'enfonce, et des absorbeurs de chocs (non visibles sur cette figure), positionnés à l'arrière de la poutre de pare-chocs 5, se déforment. Le butoir 3 entre alors en contact avec un triangle de suspension 7 de roue 9, causant une déformation de la roue 9 puis sa rotation vers l'habitacle. Cela entraîne un encastrement du butoir 3 dans le véhicule 1, causant des valeurs de décélération importantes.

Le document de brevet publié FR 3 001 932 A1 divulgue une partie avant de véhicule automobile comprenant une cale de renfort positionnée entre la paroi du pare-chocs et la roue avant. Cette cale est fixée à l'avant de l'une des poutres longitudinales. Elle a pour fonction d'empêcher une rotation de la roue de sorte que celle-ci reste en ligne et vient charger de façon stable le longeron de bas de caisse. En d'autres termes, cet enseignement prévoit un chargement contrôlé de la roue avant qui favorise ainsi l'encastrement du butoir dans le véhicule, tel que décrit ci-avant. Un tel encastrement est susceptible de provoquer une intrusion dans l'habitacle, ce qui est défavorable.

Le document EP 1 312 535 A2 montre toutes les caractéristiques du préambule de la revendication indépendante 1.

L'invention a pour objectif de pallier au moins un des inconvénients de l'état de la technique susmentionné. Plus particulièrement, l'invention a pour objectif de de limiter ou d'éviter une intrusion dans l'habitacle lors d'un impact frontal à faible recouvrement.

L'invention a pour objet un véhicule automobile comprenant, dans une partie avant dudit véhicule : un berceau ; deux triangles de suspension de roue montés pivotants à deux extrémités, respectivement, du berceau ; deux poutres longitudinales s'étendant chacune vers l'avant du véhicule, depuis une portion avant d'une des deux extrémités du berceau, respectivement ; remarquable en ce que le véhicule comprend, en outre : un impacteur disposé à l'avant d'au moins un des triangles de suspension, respectivement, et configuré pour entraîner un déplacement et une désolidarisation dudit triangle en cas d'impact frontal contre un obstacle se déplaçant le long de la poutre longitudinale correspondante. Le véhicule comprend, en outre, au moins une traverse entre les deux poutres longitudinales, au niveau du ou des impacteurs, respectivement. L'au moins une traverse s'étend transversalement et vers l'avant depuis l'impacteur correspondant

Les poutres longitudinales sont couramment appelées prolonges de berceau.

Selon un mode avantageux de l'invention, le ou chacun des impacteurs est fixé à l'extrémité correspondante du berceau, à distance du triangle de suspension correspondant.

Selon un mode avantageux de l'invention, le ou chacun des impacteurs est fixé au berceau à une zone de liaison dudit berceau à la poutre longitudinale correspondante.

Selon un mode avantageux de l'invention, la ou chacune des zones de liaison comprend une demi-coque intérieure et une demi-coque extérieure assemblée à la demi-coque intérieure de manière à entourer une portion avant de l'extrémité correspondante du berceau, l'impacteur correspondant étant fixé à au moins une des demi-coques intérieure et extérieure.

Selon un mode avantageux de l'invention, la ou chacune des zones de liaison comprend, en outre, un manchon avant inséré dans une portion avant des demi-coques intérieure et extérieure, à l'avant du berceau, ledit manchon engageant par insertion avec la poutre longitudinale correspondante.

Avantageusement, la ou chacune des demi-coques extérieures comprend une portion avant ayant un profil en forme de U et une portion arrière s'étendant depuis la portion avant contre une face supérieure du berceau.

Préférentiellement, l'au moins une traverse comprend deux traverses s'étendant entre les poutres longitudinales et se croisant en leurs centres.

Selon un mode avantageux de l'invention, pour la ou chacune des zones de liaison la demi-coque intérieure comprend un manchon latéral engageant par insertion avec la traverse correspondante.

Avantageusement, chaque zone de liaison comprend, en outre, une pièce de renfort avantageusement sous forme de cornière, la pièce de renfort étant préférentiellement positionnée sur la demi-coque extérieure de la zone de liaison.

Selon un mode avantageux de l'invention, la ou chacune des zones de liaison comprend une pièce creuse monobloc chaussant une portion avant de l'extrémité correspondante du berceau, comprenant un manchon avant engageant par insertion avec la poutre longitudinale correspondante et un manchon latéral engageant par insertion avec la traverse correspondante, et formant l'impacteur correspondant.

Avantageusement la pièce creuse monobloc est une pièce de fonderie en aluminium.

Selon un mode avantageux de l'invention, le ou chacun des impacteurs comprend un corps triangulaire et une face de contact avec le triangle correspondant, ladite face présentant un profil transversal en forme de U ou arrondie en demi-cercle.

Les mesures de l'invention sont intéressantes notamment du fait de l'impacteur qui induit la désolidarisation du triangle de suspension de la roue lors d'un choc frontal. La rupture du triangle de suspension et la séparation de la roue du reste du véhicule permet la déviation du véhicule par rapport à l'axe de choc avec le butoir. Cette déviation empêche l'encastrement du butoir entre la roue et le pied avant, ce qui limite la concentration des efforts produits par le choc au niveau de l'habitacle du véhicule, et limite le risque d'intrusions dans l'habitacle. L'invention présente également d'autres avantages, tels que l'amélioration de la raideur de la structure du véhicule en Y, ce qui favorise la déviation du véhicule lors d'un choc frontal à faible recouvrement. L'amélioration de la raideur en Y est notamment due à la présence des traverses entre les poutres longitudinales et du noeud d'encastrement positionné à la jonction entre le berceau, la poutre longitudinale et l'une des traverses. L'invention, de par sa fabrication en pièces additionnelles, est aisément adaptable à tous les types de berceaux donc à différents types de véhicule déjà en production. Ceci permet d'éviter les coûts de conception dus à l'adaptation de l'invention aux différents modèles, et diminue également les coûts de production des véhicules, notamment en diminuant les temps de fabrication. Les méthodes de fabrication sont des méthodes connues de l'homme du métier, donc facilement applicables. L'utilisation d'aluminium pour certaines pièces de renfort permet d'alléger le véhicule. De plus, l'amélioration de la résistance aux chocs à faibles recouvrement permet d'envisager la suppression d'autres renforts, notamment au niveau du montant de baie ou des portes, donc de diminuer le poids du véhicule d'environ 6kg.

D'autres caractéristiques et avantages de la présente invention seront mieux compris à l'aide de la description et des dessins parmi lesquels :
- La figure 1 montre une vue d'un véhicule tel que selon l'art antérieur, subissant un choc frontal à faible recouvrement, cette figure a été décrite précédemment lors de la description de l'art antérieur ;
- La figure 2 montre une vue du dessus d'un véhicule selon l'invention subissant un choc frontal à faible recouvrement, en début de choc et en fin de choc ;
- La figure 3 est une vue du dessous d'un véhicule montrant l'emplacement de l'invention ;
- La figure 4 est une vue d'une structure avant de véhicule automobile, avec les traverses montrées à la figure 3 ;
- La figure 5 est une vue en perspective d'une zone de liaison telle que montrée à la figure 3, depuis l'intérieur du véhicule ;
- La figure 6 est une vue en perspective d'une demi-coque intérieure de la zone de liaison montrée à la figure 5 ;
- La figure 7 est une vue en perspective d'une demi-coque extérieure de la zone de liaison montrée à la figure 5 ;
- La figure 8 est une vue en perspective d'un manchon avant de la zone de liaison montrée à la figure 5 ;
- La figure 9 est une vue en perspective d'une pièce de renfort de la zone de liaison montrée à la figure 5 ;
- La figure 10 comprend deux vues en perspective d'un impacteur de la zone de liaison selon un premier mode de réalisation de l'invention ;
- La figure 11 montre une vue en perspective de la zone de liaison telle que montrée à la figure 5, depuis l'extérieur du véhicule ;
- La figure 12 montre une vue en perspective d'un impacteur de la zone de liaison selon un second mode de réalisation de l'invention.

La figure 2 montre deux vues du dessus d'un véhicule selon l'invention subissant un choc frontal à faible recouvrement. Lorsque le véhicule 101 entre en contact avec un butoir 103, une poutre de pare-chocs avant 105 s'enfonce. Le butoir 103 pénètre alors la carrosserie et va entrer en contact avec une roue avant 109 du véhicule 101. La présence d'un dispositif de renforcement et de rupture (non visible sur cette figure) va conduire à la séparation de la roue 109 du reste du véhicule 101, grâce notamment à la présence d'un impacteur (non visible sur cette figure). Cet impacteur, en entrant en contact avec un triangle de suspension 107 de roue 109, va conduire à la désolidarisation dudit triangle 107.

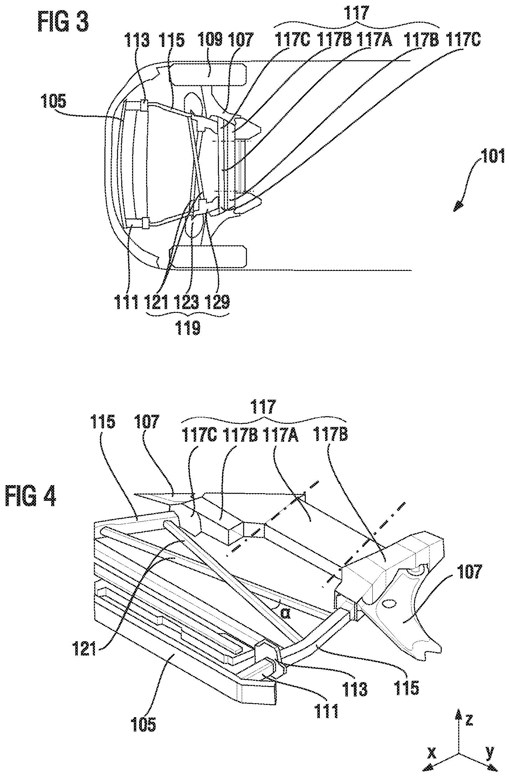

La figure 3 montre une vue du dessous du véhicule selon l'invention. Sur cette figure, on peut voir que la structure du véhicule 101 comprend un berceau 117, le berceau 117 étant lui-même composé par au moins une traverse 117A avec deux extrémités 117B latérales. Les deux extrémités 117B du berceau 117 comprennent, chacune, une portion avant 117C. Depuis chacune de ces portions avant 117C s'étendent deux poutres longitudinales 115, prolongées à l'avant par deux absorbeurs de chocs 111.

Chacune des poutres longitudinales 115 et chacun des absorbeurs de chocs 111 correspondant sont maintenus ensemble par une platine de fixation 113. Le dispositif de renforcement et de rupture 119 est positionné entre les poutres longitudinales 115, les triangles de suspension 107 et le berceau 117. Il comprend un impacteur 123, et accessoirement une zone de liaison 129 et/ou au moins une traverse 121. Préférentiellement, deux traverses 121 sont positionnées entre les poutres longitudinales 115, au niveau du ou des impacteurs 123, respectivement. Plus préférentiellement, un impacteur 123 et une zone de liaison 129 sont positionnés à chacune des intersections entre la poutre longitudinale 115, le triangle de suspension 107 et la portion avant 117C du berceau 117 correspondants. Chacun des impacteurs 123 est fixé au berceau 117 par la zone de liaison 129, c'est-à-dire à chacune des extrémités 117B du berceau 117 et à distance et à l'avant du triangle de suspension 107 correspondant.

La figure 4 montre une vue en perspective de la structure de véhicule selon l'invention. On définit alors en référence au véhicule :
- une direction longitudinale (axe X) correspondant à la direction de déplacement du véhicule,
- une direction transversale (axe Y), perpendiculaire à la direction du déplacement du véhicule et horizontale,
- une direction verticale (axe Z) perpendiculaire au plan (XY).

Cette figure permet de voir en particulier les traverses 121, chacune des traverses 121 s'étendant transversalement et vers l'avant depuis l'impacteur (non visible sur cette figure) correspondant. Les traverses 121 sont préférentiellement au nombre de deux par véhicule, et se croisent en leurs centres selon un angle α supérieur ou égale à 10° et/ou inférieur ou égale à 30°, ledit angle α étant orienté vers les côtés du véhicule. Les traverses 121 sont préférentiellement encastrées dans la zone de liaison (non visible sur cette figure), et peuvent être soudés aux poutres longitudinales 115 notamment au niveau de l'extrémité la plus en avant de la traverse 121.

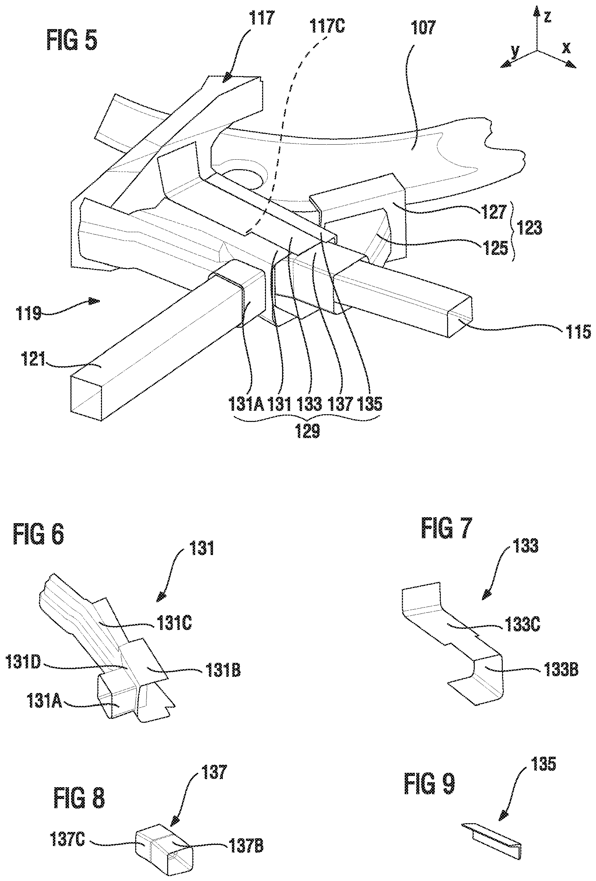

La figure 5 montre une vue en perspective de la zone de liaison depuis l'intérieur du véhicule automobile selon l'invention. Chaque zone de liaison 129 est préférentiellement constituée par une demi-coque intérieure 131 et par une demi-coque extérieure 133. Les deux demi-coques extérieure 133 et intérieure 131 sont assemblées de manière à entourer la portion avant 117C de l'extrémité correspondante du berceau 117. La demi-coque intérieure 131 comprend un manchon latéral 131A engageant par insertion avec la traverse correspondante 121. Une pièce de renfort 135 est généralement positionnée au-dessus et à l'arrière de la demi-coque extérieure 133, elle forme un profilé avec une section à angle droit. La zone de liaison 129 comprend en outre un manchon avant 137, le manchon avant 137 engageant par insertion avec la poutre longitudinale 115 correspondante, à l'avant du berceau 117. Le manchon avant 137 est préférentiellement positionné à l'intérieur des demi-coques extérieure 133 et intérieure 131. L'impacteur 123 est généralement fixé sur la demi-coque extérieure 133 et partiellement sur le manchon avant 137. L'impacteur 123 comprend deux portions, un corps triangulaire 125 et une portion en U 127 avec le triangle de suspension 107 correspondant.

Les figures 6 à 9 représentent les différents éléments constituant la zone de liaison du dispositif de renforcement et de rupture selon l'invention.

La figure 6 montre une vue en perspective de la demi-coque intérieure de la zone de liaison selon l'invention. La demi-coque intérieure 131 comprend une portion avant 131B et une portion arrière 131C ayant des profils en forme de U, le manchon latéral 131A s'étendant depuis une âme 131D de la portion avant 131B.

La figure 7 montre une vue en perspective de la demi-coque extérieure de la zone de liaison selon l'invention. La demi-coque extérieure 133 comprend une portion avant 133B et une portion arrière 133C, la portion avant 133B ayant un profil en forme de U. La portion arrière 133C s'étend depuis la portion avant 133B, vers une face supérieure du berceau (non visible sur cette figure).

Préférentiellement, en référence aux figures 6 et 7, les demi-coques extérieure 133 et intérieure 131 sont préférentiellement réalisées dans des matériaux métalliques, plus préférentiellement en acier. Elles sont préférentiellement d'une épaisseur comprise entre 1mm et 2mm, plus préférentiellement entre 1.4mm et 1.8mm pour la demi-coque intérieure 131 et entre 1.6mm à 2 mm pour la demi-coque extérieure 133. Les demi-coques intérieure et extérieure (131, 133) sont préférentiellement soudées entre elles entre les portions avant et arrière (131B, 133B ; 131C, 133C).

La figure 8 montre une vue en perspective du manchon avant de la zone de liaison. Le manchon avant 137 à une section transversale parallélépipédique, et comprend deux portions avant 137B et arrière 137C, la portion arrière 137C étant sensiblement plus grande que la portion avant 137B. Les deux portions (137B, 137C) sont rattachées ensemble par des techniques connues de l'homme du métier, comme par soudure. Le manchon avant 137 peut également être produit par extrusion. Le manchon avant 137 est préférentiellement réalisé dans des matériaux métalliques, plus préférentiellement en acier, l'épaisseur de la tôle étant préférentiellement comprise entre 1,3mm et 1,7mm.

La figure 9 montre une vue en perspective de la pièce de renfort de la zone de liaison selon l'invention. La pièce de renfort 135 présente une forme longitudinale, comprenant deux bandes pliées à angle droit. La pièce de renfort 135 est préférentiellement fabriquée dans des matériaux métalliques, tels que l'acier. L'épaisseur des deux bandes de la pièce de renfort 135 est préférentiellement comprise entre 1.4mm et 1.8mm.

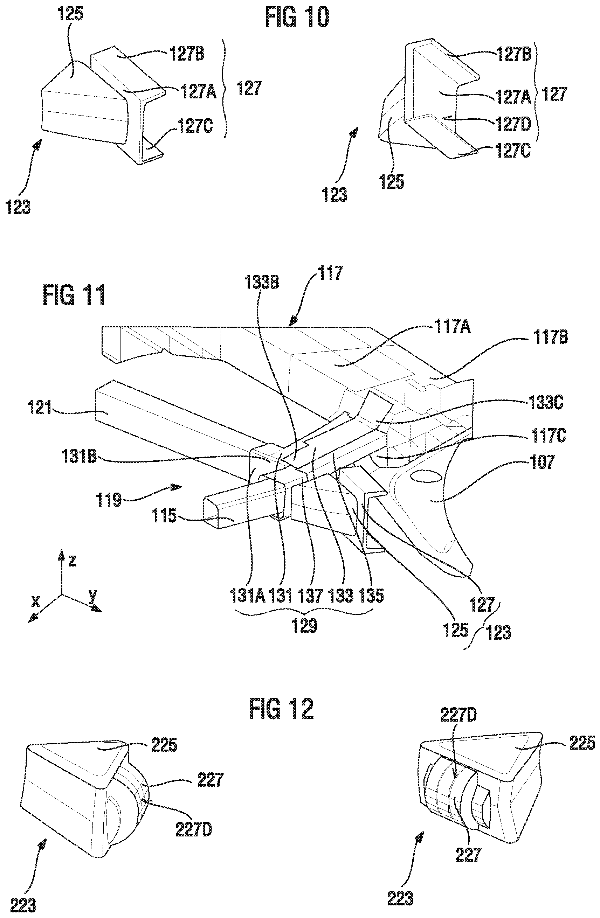

La figure 10 montre deux vues de l'impacteur selon un premier mode de réalisation de l'invention. L'impacteur 123 comprend le corps triangulaire 125 et la portion en U 127. La portion en U 127 comprend deux ailes supérieure 127B et inférieure 127C encadrant une âme centrale 127A, une face de contact 127D avec le triangle de suspension (non visible sur cette figure), la face de contact 127D étant positionnée à l'intérieur du profil en U, au niveau de l'âme 127A et des ailes (127B, 127C). Préférentiellement, l'impacteur 123 est réalisé dans des matériaux métalliques, préférentiellement en acier, avec une épaisseur comprise entre 2.3mm à 2.7mm, ou en aluminium, avec une épaisseur comprise entre 2.7mm et 3.3mm.

La figure 11 montre une vue en perspective depuis l'extérieur du véhicule, de la zone de liaison de véhicule automobile selon l'invention. Le manchon avant 137 est préférentiellement inséré dans les portions avant (131B, 133B) des demi-coques intérieure 131 et extérieure 133. La portion arrière 133C de la demi-coque extérieure 133 est préférentiellement positionnée contre la portion avant 117C du berceau 117.

La figure 12 décrit un impacteur 223 selon un deuxième mode de réalisation de l'invention. Cette figure reprend la numérotation des figures 2 à 11 pour les éléments identiques ou similaires, la numération étant toutefois incrémentée de 100. Il est par ailleurs fait référence à la description de ces éléments en relation avec le premier mode de réalisation. Des numéros spécifiques compris entre 200 et 300 sont utilisés pour les éléments spécifiques à ce mode de réalisation. Cet impacteur 223 présente la plupart des caractéristiques de l'impacteur 123 décrit dans le premier mode de réalisation.

Dans ce deuxième mode de réalisation de l'invention, l'impacteur 223 présente une portion arrière 227 en forme de demi-cylindre. Ainsi la face de contact 227D est arrondie en demi-cercle. Dans ce mode de réalisation de l'impacteur 223, l'impacteur 223 est préférentiellement réalisé dans des matériaux métalliques, plus particulièrement en aluminium. Celui-ci est préférentiellement usiné ou réalisé par fonderie.

De manière générale, le berceau est extrudé puis usiné. Il est préférentiellement fabriqué en matériau métallique, plus particulièrement en aluminium. La zone de liaison du dispositif de renforcement et de rupture peut être formé par une pièce creuse monobloc réalisée par fonderie. Cette pièce creuse chausse alors une portion avant de l'extrémité correspondante du berceau. Cette pièce creuse monobloc comprend un manchon avant engageant avec la poutre longitudinale correspondante et un manchon latéral engageant par insertion avec la traverse correspondante et formant l'impacteur correspondant.

## Revendications

1. Véhicule automobile (101) comprenant, dans une partie avant dudit véhicule (101) :
- un berceau (117) ;
- deux triangles de suspension (107) de roue (109) montés pivotants à deux extrémités (117B), respectivement, du berceau (117) ;
- deux poutres longitudinales (115) s'étendant chacune vers l'avant du véhicule (101), depuis une portion avant (117C) d'une des deux extrémités (117B) du berceau (117), respectivement ;
- un impacteur (123 ; 223) disposé à l'avant d'au moins un des triangles de suspension (107), respectivement, et configuré pour entraîner un déplacement et une désolidarisation dudit triangle (107) en cas d'impact frontal contre un obstacle se déplaçant le long de la poutre longitudinale (115) correspondante,
ledit véhicule (101) est **caractérisé en ce qu'**il comprend, en outre, au moins une traverse (121) entre les deux poutres longitudinales (115), au niveau du ou des impacteurs (123 ; 223), respectivement, et l'au moins une traverse (121) s'étendant transversalement et vers l'avant depuis l'impacteur (123 ; 223) correspondant.

2. Véhicule (101) automobile selon la revendication 1, **caractérisé en ce que** le ou chacun des impacteurs (123 ; 223) est fixé à l'extrémité (117B) correspondante du berceau (117), à distance du triangle de suspension (107) correspondant.

3. Véhicule (101) automobile selon la revendication 2, **caractérisé en ce que** le ou chacun des impacteurs (123 ; 223) est fixé au berceau (117) à une zone de liaison (129) dudit berceau (117) à la poutre longitudinale (115) correspondante.

4. Véhicule (101) automobile selon la revendication 3, **caractérisé en ce que** la ou chacune des zones de liaison (129) comprend une demi-coque intérieure (131) et une demi-coque extérieure (133) assemblée à la demi-coque intérieure (131) de manière à entourer une portion avant (117C) de l'extrémité (117B) correspondante du berceau (117), l'impacteur (123 ; 223) correspondant étant fixé à au moins une des demi-coques intérieure (131) et extérieure (133).

5. Véhicule (101) automobile selon la revendication 4, **caractérisé en ce que** la ou chacune des zones de liaison (129) comprend, en outre, un manchon avant (137) inséré dans une portion avant (131B ; 133B) des demi-coques intérieure (131) et extérieure (133), à l'avant du berceau (117), ledit manchon (137) engageant par insertion avec la poutre longitudinale (115) correspondante.

6. Véhicule (101) automobile selon l'une des revendications 4 et 5, **caractérisé en ce que** pour la ou chacune des zones de liaison (129) la demi-coque intérieure (131) comprend un manchon latéral (131A) engageant par insertion avec la traverse (121) correspondante.

7. Véhicule (101) automobile selon la revendication 3, **caractérisé en ce que** la ou chacune des zones de liaison (129) comprend une pièce creuse monobloc chaussant une portion avant (117C) de l'extrémité (117B) correspondante du berceau (117), comprenant un manchon avant engageant par insertion avec la poutre longitudinale (115) correspondante et un manchon latéral engageant par insertion avec la traverse (121) correspondante, et formant l'impacteur (123 ; 223) correspondant.

8. Véhicule (101) automobile selon l'une des revendications 1 à 7, **caractérisé en ce que** le ou chacun des impacteurs (123 ; 223) comprend un corps triangulaire (125 ; 225) et une face de contact (127D; 227D) avec le triangle (107) correspondant, ladite face (127D ; 227D) présentant un profil transversal en forme de U ou arrondie en demi-cercle.

## Patentansprüche

1. Kraftfahrzeug (101), das in einem vorderen Teil des Fahrzeugs (101) umfasst:
- Wiege (117);
- zwei Aufhängungsdreiecken (107) des Rades (109), die an zwei Enden (117B) des Gestells (117) schwenkbar gelagert sind;
- zwei Längsbalken (115), die sich jeweils von einem vorderen Abschnitt (117C) eines der beiden Enden (117B) des Gestells (117) nach vorne des Fahrzeugs (101) erstrecken;
- ein vor mindestens einem der Aufhängungsdreiecke (107) angeordneter Impaktor (123; 223), der so ausgebildet ist, dass er bei einem Frontalaufprall auf ein entlang des jeweiligen Längsträgers (115) bewegtes Hindernis eine Bewegung und eine Entkopplung des Dreiecks (107) bewirkt,
das Fahrzeug (101) ist **dadurch gekennzeichnet, dass** es außerdem mindestens einen Querträger (121) zwischen den beiden Längsbalken (115) an dem bzw. den Impaktoren (123; 223) und den mindestens einen Querträger (121) aufweist, der sich quer und nach vorne von dem entsprechenden Impaktor (123; 223) erstreckt.

2. Kraftfahrzeug (101) nach Anspruch 1, **dadurch gekennzeichnet, dass** der oder jeder der Aufprallkörper (123; 223) an dem entsprechenden Ende (117B) des Gestells (117) im Abstand von dem entsprechenden Aufhängungsdreieck (107) befestigt ist.

3. Kraftfahrzeug (101) nach Anspruch 2, **dadurch gekennzeichnet, dass** der oder jeder der Aufpraller (123; 223) an dem Gestell (117) an einem Verbindungsbereich (129) des Gestells (117) mit dem entsprechenden Längsbalken (115) befestigt ist.

4. Kraftfahrzeug (101) nach Anspruch 3, **dadurch gekennzeichnet, dass** der oder jeder der Verbindungsbereiche (129) eine innere Halbschale (131) und eine äußere Halbschale (133) umfasst, die mit der inneren Halbschale (131) so verbunden ist, dass sie einen vorderen Abschnitt (117C) des entsprechenden Endes (117B) des Gestells (117) umgibt, wobei der entsprechende Aufprallkörper (123; 223) an mindestens einer der inneren Halbschalen (13) befestigt ist 1) und außen (133).

5. Kraftfahrzeug (101) nach Anspruch 4, **dadurch gekennzeichnet, dass** der oder jeder der Verbindungsbereiche (129) ferner eine vordere Hülse (137) aufweist, die in einen vorderen Abschnitt (131B; 133B) der inneren (131) und äußeren (133) Halbschalen vor dem Gestell (117) eingesetzt ist, wobei die Hülse (137) mit dem entsprechenden Längsbalken (115) in Eingriff steht.

6. Kraftfahrzeug (101) nach einem der Ansprüche 4 und 5, **dadurch gekennzeichnet, dass** die innere Halbschale (131) für den oder jeden der Verbindungsbereiche (129) eine seitliche Hülse (131A) aufweist, die mit dem entsprechenden Querträger (121) in Eingriff steht.

7. Kraftfahrzeug (101) nach Anspruch 3, **dadurch gekennzeichnet, dass** der oder jeder der Verbindungsbereiche (129) ein einstückiges hohles Teil aufweist, das einen vorderen Abschnitt (117C) des entsprechenden Endes (117B) des Gestells (117) auskleidet, das eine vordere Hülse aufweist, die durch Einführen mit dem entsprechenden Längsbalken (115) in Eingriff steht, und eine seitliche Hülse aufweist, die durch Einführen mit dem entsprechenden Querträger (121) in Eingriff steht und den entsprechenden Stößel (123; 223) bildet.

8. Kraftfahrzeug (101) nach einem der Ansprüche 1 bis 7, **dadurch gekennzeichnet, dass** der oder jeder der Aufprallkörper (123; 223) einen dreieckigen Körper (125; 225) und eine Kontaktfläche (127D; 227D) mit dem entsprechenden Dreieck (107) aufweist, wobei die Fläche (127D; 227D) ein U-förmiges oder halbkreisförmig gerundetes Querprofil aufweist.

## Claims

1. A motor vehicle (101) comprising, in a front part of said vehicle (101):
- a cradle (117);
- two wheel suspension triangles (107) (109) pivotally mounted at two ends (117B), respectively, of the cradle (117);
- two longitudinal beams (115) each extending towards the front of the vehicle (101), from a front portion (117C) of one of the two ends (117B) of the cradle (117), respectively;
- an impactor (123; 223) arranged in front of at least one of the suspension triangles (107), respectively, and configured to cause displacement and detachment of said triangle (107) in the event of a frontal impact against an obstacle moving along the corresponding longitudinal beam (115),
the vehicle (101) is **characterized in that** it further comprises at least one cross member (121) between the two longitudinal beams (115), at the impactor(s) (123; 223), respectively, and the at least one cross member (121) extending transversely and forwards from the corresponding impactor (123; 223).

2. Motor vehicle (101) according to claim 1, **characterized in that** the or each of the impactors (123; 223) is fixed to the corresponding end (117B) of the cradle (117), at a distance from the corresponding suspension triangle (107).

3. Motor vehicle (101) according to claim 2, **characterized in that** the or each of the impactors (123; 223) is fixed to the cradle (117) at a zone (129) for connecting said cradle (117) to the corresponding longitudinal beam (115).

4. A motor vehicle (101) according to claim 3, **characterized in that** the or each of the connection zones (129) comprises an inner half-shell (131) and an outer half-shell (133) assembled to the inner half-shell (131) so as to surround a front portion (117C) of the corresponding end (117B) of the cradle (117), the corresponding impactor (123; 223) being fixed to at least one of the inner half-shells (131) and exterior (133).

5. A motor vehicle (101) according to claim 4, **characterized in that** the or each of the connection zones (129) further comprises a front sleeve (137) inserted into a front portion (131B; 133B) of the inner (131) and outer (133) half-shells, at the front of the cradle (117), said sleeve (137) engaging by insertion with the corresponding longitudinal beam (115).

6. Motor vehicle (101) according to one of claims 4 and 5, **characterized in that**, for the or each of the connection zones (129), the inner half-shell (131) comprises a lateral sleeve (131A) engaging by insertion with the corresponding cross-member (121).

7. Motor vehicle (101) according to claim 3, **characterized in that** the or each of the connection zones (129) comprises a hollow one-piece part fitting a front portion (117C) of the corresponding end (117B) of the cradle (117), comprising a front sleeve engaging by insertion with the corresponding longitudinal beam (115) and a lateral sleeve engaging by insertion with the corresponding cross-member (121), and forming the corresponding impactor (123; 223).

8. Motor vehicle (101) according to one of claims 1 to 7, **characterized in that** the or each of the impactors (123; 223) comprises a triangular body (125; 225) and a face (127D; 227D) for contact with the corresponding triangle (107), the said face (127D; 227D) having a transverse profile in the form of a U or rounded in a semi-circle.
